# EUROPÄISCHE PATENTANMELDUNG

(11) **EP 3 382 476 A1**
(43) Veröffentlichungstag der Anmeldung: **03.10.2018**
(21) Anmeldenummer: 17163732.5
(22) Anmeldetag: 30.03.2017
(51) Int. Cl.: G05B 15/02, G05B 19/05

(54) **PROGRAMMIEREN VON AUTOMATISIERUNGSSYSTEMEN MITTELS EINER GRAFISCHEN PROGRAMMIERSPRACHE**

(71) Anmelder: Siemens AG Österreich, 1210 Wien (AT)
(72) Erfinder: Krammer, Lukas, 1220 Wien (AT); Lechner, Daniel, 2170 Poysdorf (AT)
(74) Vertreter: Maier, Daniel Oliver

(57) **Zusammenfassung**

Die Erfindung betrifft ein Verfahren zum Programmieren von Automatisierungssystemen mittels einer grafischen Programmiersprache unter Verwendung eines Computers, bei welchem Verfahren auf einer grafischen Oberfläche zwischen Ein- und Ausgängen (E1,E2) von Funktionsblöcken (SET VAL, T SENS VAL 1, B SENS VAL, T SENS VAL 2, PID) Verbindungen (V1,V2,V3,V4) hergestellt werden. Zur Überprüfung der Verbindungen zwischen Funktionsblöcken bereits während des Programmierens ist vorgesehen,
- dass zumindest einem Ausgang eines ersten Funktionsblocks (SET VAL, T SENS VAL 1, B SENS VAL, T SENS VAL 2) und einem Eingang (E1,E2) eines zweiten Funktionsblocks (PID) eine semantische Annotation zugeordnet wird,
- dass eine Verbindung (V1,V2) zwischen dem Ausgang des ersten Funktionsblocks (SET VAL, T SENS VAL 1) und dem Eingang (E1,E2) des zweiten Funktionsblocks (PID) hergestellt wird, wenn diese Verbindung (V1,V2) nach der semantischen Annotation des Ausgangs des ersten Funktionsblocks (SET VAL, T SENS VAL 1) einerseits und nach der semantischen Annotation des Eingangs (E1,E2) des zweiten Funktionsblocks (PID) andererseits zulässig ist.

## Beschreibung

### GEBIET DER ERFINDUNG

Die vorliegende Erfindung betrifft ein Verfahren zum Programmieren von Automatisierungssystemen mittels einer grafischen Programmiersprache unter Verwendung eines Computers, bei welchem Verfahren auf einer grafischen Oberfläche zwischen Ein- und Ausgängen von Funktionsblöcken Verbindungen hergestellt werden, sowie ein entsprechendes Computerprogrammprodukt.

Das Verfahren kann generell dort angewendet werden, wo Automationssysteme graphisch programmiert werden, etwa im Bereich der Industrieautomation.

Insbesondere kann das erfindungsgemäße Verfahren auf Automatisierungssysteme in sogenannten "Smart Grids", also intelligenten Netzen, angewendet werden, welche eine kommunikative Vernetzung und Steuerung von Stromerzeugern, Speichern, elektrischen Verbrauchern und Netzbetriebsmitteln in Energieübertragungs- und Energieverteilungsnetzen der Elektrizitätsversorgung verwirklichen.

Das erfindungsgemäße Verfahren kann aber auch auf kleinere elektrische Niederspannungsnetze angewendet werden, etwa auf solche innerhalb sogenannter "Smart Buildings", die auch als intelligente Häuser oder intelligente Gebäude bezeichnet werden. Diese Smart Buildings umfassen etwa fluktuierende Erzeuger (z.B. Photovoltaikanlagen, Kleinwindkraftanlagen), flexible Verbraucher und Speicher für elektrische Energie, oder zum Beispiel die Ladeinfrastruktur für Elektrofahrzeuge. Das Gebäude wird "smart" bzw. intelligent durch den Einsatz eines modernen Gebäudeautomationssystems (CEMS - Customer Energy Management System). Gebäudeautomation umfasst die Gesamtheit von Überwachungs-, Steuer-, Regel- und Optimierungseinrichtungen in Gebäuden. Ziel ist es, Funktionsabläufe komponentenübergreifend selbstständig (automatisch) und nach vorgegebenen Einstellwerten (Parametern) durchzuführen. Alle Sensoren, Aktoren, Bedienelemente, Verbraucher und andere technische Einheiten im Gebäude werden miteinander vernetzt. Abläufe können in Szenarien zusammengefasst werden. Kennzeichnendes Merkmal ist die durchgängige Vernetzung mittels eines Bussystems. Die Gebäudeautomationssysteme der Smart Buildings, bzw. die Energiemanagementsysteme als Teil der Gebäudeautomationssysteme, können in der Regel für die einzelnen Komponenten des Gebäudes den Eigenbedarf elektrischer und thermischer Energie optimieren, lokale (auf das Gebäude bezogene) Prognosen erstellen und flexible Tarifvorgaben, die markt- bzw. auch netzspezifische Anteile aufweisen, berücksichtigen.

Viele der Komponenten (Geräte) von Smart Grids oder Smart Buildings können in ein gemeinsames Automatisierungssystem eingebunden sein und selbst jeweils über ein oder mehrere Automatisierungsfunktionen verfügen.

### STAND DER TECHNIK

Bei sogenannten Engineering-Werkzeugen in der Automation auf dem Gebiet der Gebäudetechnik, der Industrie oder der Stromnetze wird oft eine grafische Programmiersprache verwendet, z.B. Continuous Function Charts (CFCs; deutsch Signalflusspläne).

CFCs können z.B. als Programmiersprache für speicherprogrammierbare Steuerungen (SPS) verwendet werden. Ihr Hauptanwendungsgebiet liegt vor allem in der Prozessleittechnik, weil sich die dort auftretenden, komplexen Steuerungs- und Regelungsaufgaben sehr gut in CFCs abbilden lassen. CFC ist eine graphische Programmiersprache, in der Funktionsblöcke miteinander verschaltet werden, anstatt eine Abfolge von textuellen Befehlen einzugeben wie bei klassischen Programmiersprachen. Als Vorbild sind dabei Schaltpläne aus der Hardwareentwicklung zu sehen. Die Funktionsblöcke sind frei positionierbar und der Programmierer hat mehr Möglichkeiten zur Verknüpfung von Ein- und Ausgängen als bei Programmiersprachen mit strikter zeilenweiser Abarbeitung. Die Ein- und Ausgänge von Funktionsblöcken werden z.B. auf der grafischen Oberfläche des Programms durch Linien miteinander verbunden.

Die Funktionsblöcke realisieren jeweils eine bestimmte Funktion und können dann durch Parameter weiter konfiguriert werden, womit das genaue Verhalten festgelegt wird. Die einzelnen Funktionen der Funktionsblöcke sind im Falle von Steuerungen selbst oft in anderen SPS-Sprachen verfasst und können vom Hersteller des Automatisierungssystems als Standardbausteine in einer Bibliothek mitgeliefert oder vom Anwender selbst verfasst werden.

In bestehenden Programmen können die Verbindungen zwischen den Ein- und Ausgängen der Funktionsblöcke mit wenigen Einschränkungen beliebig erfolgen. Dabei wird seitens des Programms lediglich überprüft, ob Eingänge mit Ausgängen verbunden sind oder ob sich die Datentypen (binär, ganzzahlig, Gleitpunktzahl) der Anschlüsse, also der Ein- und Ausgänge, decken. Es wird jedoch nicht überprüft, ob die Verbindungen semantisch zueinander passen, also z.B. ob ein Ausgang für einen Temperaturwert mit einem Eingang für einen Temperaturwert verbunden wird. Dadurch kann es sehr leicht zu einer fehlerhaften Konfiguration des Automatisierungssystems und dadurch zu einem fehlerhaften Anlagenverhalten der durch das Automatisierungssystem gesteuerten Anlage kommen. Der Aufwand zur Korrektur des Fehlers hängt davon ab, in welchem Stadium der Fehler auftritt bzw. erkannt wird. Besonders schwerwiegend sind Fehler, die erst beim Vollbetrieb der automatisierten Anlage erkennbar werden.

Bisher wurde die Überprüfung der Verbindungen zwischen den Funktionsblöcken manuell durch den Systemintegrator während des Programmiervorgangs oder danach durchgeführt. Oftmals wurden Fehler aber erst während des Integrationstests, bei der Inbetriebnahme oder erst später im laufenden Betrieb der automatisierten Anlage erkannt.

### DARSTELLUNG DER ERFINDUNG

Es ist somit eine Aufgabe der Erfindung, ein Verfahren anzugeben, mit welchem eine Überprüfung der Verbindungen zwischen Funktionsblöcken bereits während des Programmierens durchgeführt werden kann.

Diese Aufgabe wird durch ein Verfahren nach Anspruch 1 gelöst, welches vorsieht,
- dass zumindest einem Ausgang eines ersten Funktionsblocks und einem Eingang eines zweiten Funktionsblocks eine semantische Annotation zugeordnet wird,
- dass eine Verbindung zwischen dem Ausgang des ersten Funktionsblocks und dem Eingang des zweiten Funktionsblocks hergestellt wird, wenn diese Verbindung nach der semantischen Annotation des Ausgangs des ersten Funktionsblocks einerseits und nach der semantischen Annotation des Eingangs des zweiten Funktionsblocks andererseits zulässig ist.

Es werden also semantisch annotierte Ein- und Ausgänge, bzw. semantisch annotierte Ein- und Ausgangsdaten verwendet. Eine sprachliche Beschreibung eines Datums enthält zumeist eine Vielzahl von verwertbaren semantischen Informationen und ergibt daher eine Vielzahl von verwertbaren semantischen Annotationen (die hier einfach alle gemeinsam als semantische Annotation bezeichnet werden). Einem Ein- oder Ausgang kann z.B. folgende Beschreibung zugeordnet sein: "bei diesem Eingang/Ausgang handelt es sich um eine gemessene Außentemperatur". Daraus ergeben sich folgende semantische Annotationen:
- "Eingang/Ausgang" gibt die Datenflussrichtung an,
- "gemessen": es handelt sich um einen Messwert und nicht um einen virtuellen oder berechneten Wert,
- "Temperatur" gibt den physikalischen Parameter an,
- "Außentemperatur" beinhaltet eine ungefähre Ortsangabe, wo die Temperatur gemessen worden ist.

Semantische Annotationen können auch physikalische Einheiten umfassen, wie im obigen Beispiel etwa, dass es sich bei dem Messwert um "°C" handelt, oder auch Funktionsbezeichnungen, wie "Vorlauftemperatur im Anlagenteil X".

Dabei kann der Fall auftreten, dass der Eingangs- oder Ausgangsdatentyp von der Funktion des Funktionsblocks oder von dessen Parametern abhängig ist. Beispielsweise kann es notwendig sein, dass an einem Eingang des Funktionsblocks eine Temperatur in °C anliegt.

Dementsprechend kann vorgesehen sein, dass einem Funktionsblock eine semantische Annotation (entsprechend einer Vorschrift des Funktionsblocks) zugeordnet wird und die Zulässigkeit der Verbindung von der semantischen Annotation (also von der Vorschrift) des Funktionsblocks abhängig ist. Selbst wenn der Eingang dieses Funktionsblocks in seiner semantischen Annotation nur eine "Temperatur" fordert, wäre eine Verbindung zu diesem Eingang, die eine "Temperatur" in Kelvin liefert, nicht zulässig, weil dies durch die Vorschrift des Funktionsblocks ausgeschlossen ist. Diese, der Vorschrift entsprechende semantische Information kann auch direkt der semantischen Annotation der einzelnen Eingänge des Funktionsblocks hinzugefügt werden.

Damit sind aber auch Fälle abgedeckt, wo Ein- und Ausgang desselben Funktionsblocks gegenseitige Abhängigkeiten haben. Beispielsweise muss bei einem Regler für Führungsgröße und Regelgröße die selbe physikalische Größe in der selben physikalischen Einheit verwendet werden, obwohl der Regler an sich generisch aufgebaut ist. Das heißt, durch Zuweisung einer physikalischen Größe (und Einheit) zum Eingang ergeben sich automatisch Einschränkungen und/oder Abhängigkeiten für den Ausgang, und umgekehrt.

Grundsätzlich sind für das erfindungsgemäße Verfahren zwei Betriebsarten denkbar: bei der ersten Betriebsart ist vorgesehen, dass eine Verbindung zwischen den beiden Funktionsblöcken zuerst von einem Programmierer händisch eingegeben und erst dann hergestellt wird (also in das Programm übernommen wird), wenn sie gemäß der semantischen Annotation zulässig ist. Der Programmierer legt also vorläufig eine Verbindung zwischen zwei Funktionsblöcken an, das dem erfindungsgemäßen Verfahren zugrunde liegende Computerprogramm überprüft, ob diese Verbindung den semantischen Annotationen von verbundenen Ein- und Ausgängen entspricht und übernimmt diese Verbindung gegebenenfalls. Sonst wird für den Programmierer eine Fehlermeldung ausgegeben und der Programmierer muss eine Korrektur vornehmen.

Die zweite Betriebsart sieht vor, dass dem Programmierer zumindest eine zulässige Verbindung zwischen den beiden Funktionsblöcken vorgeschlagen wird und nach Auswahl einer Verbindung durch den Programmierer diese ausgewählte Verbindung hergestellt wird. Es werden also dem Programmierer z.B. nur mehr jene Verbindungen auf der grafischen Oberfläche angezeigt werden, die zulässig sind. Der Programmierer muss dann nur mehr eine dieser Verbindungen auswählen und die ausgewählte Verbindung wird dann für den Betrieb des Automatisierungssystems hergestellt. Denkbar wäre auch, dass dem Programmierer für eine bestimmte Verbindung nur die gültigen Endpunkte, also bestimmte Eingänge und zugehörige Ausgänge verschiedener Funktionsblöcke, angezeigt werden, etwa farblich hervorgehoben.

Die zweite Betriebsart ermöglicht eine schnellere Erstellung des Programms für das Automatisierungssystem.

Bei beiden Betriebsarten kann vorgesehen sein, dass eindeutige zulässige Verbindungen ohne Eingriff eines Programmierers automatisch erstellt werden. Wenn es also z.B. gemäß den semantischen Annotationen nur eine zulässige Verbindung zwischen dem Ausgang des ersten und dem Eingang des zweiten Funktionsblocks gibt, dann wird diese Verbindung automatisch hergestellt, ohne dass der Programmierer diese Verbindung selbst einzeichnen oder selbst auswählen muss.

Es kann vorgesehen sein, dass dem Informationsmodell für die semantischen Annotationen eine Ontologie zugrunde liegt. Mit deren Hilfe lässt sich ableiten, ob eine Verbindung passend oder nicht passend sein kann. Z.B. können mehrere Funktionsblöcke durch eine Ontologie miteinander verknüpft sein. Allerdings sind neben einer Ontologie auch andere Darstellungsformen der Zusammenhänge von Information denkbar.

Das Engineering bzw. die Gestaltung einer industriellen Anlage erfolgt durch Datenverarbeitungswerkzeuge bzw. - methoden und zieht in der Regel Beschreibungen einer industriellen Anlage heran. Themenspezifische Basisobjekte liegen diesen Beschreibungen zugrunde. Diese Basisobjekte können in eine Ontologie eingebunden sein. Themenspezifische Anlagen-Basisobjekte können z.B. Objekte sein, die einen Materialfluss beschreiben. Diese Ontologie aus (Anlagen-)Basisobjekten beschreibt die prinzipiellen Komponenten und deren prinzipielles Zusammenwirken, ohne auf anlagenspezifische Einzelheiten einzugehen. Unter Ontologie wird häufig eine (formal) geordnete Darstellung einer Menge von Begrifflichkeiten und deren zwischen ihnen stehenden Beziehungen in einem bestimmten Gegenstandsbereich verstanden. Die Begrifflichkeiten können hierbei durch Objekte repräsentiert werden. Der Gegenstandsbereich kann hierbei eine spezifische industrielle Anlage oder ein Gebäude sein.

In einem solchen Fall werden aus ursprünglich allgemein einem Anlagentyp zugehörigen Objekten Instanzen abgeleitet, um projektspezifische Merkmale in Form von Engineering-Daten zu beschreiben. Dabei wird die Anlage üblicherweise über mehrere Ebenen gegebenenfalls mehrfach hierarchisch logisch auf die einzelnen Komponenten herunter gebrochen. Beispiele hierfür sind die räumliche, funktionale, logische, bauliche, elektrische, pneumatische, thermische oder sicherheitstechnische Gliederung. Soweit sinnvoll wird jede einzelne Komponente, Rolle oder Situation der Anlage dabei jeweils einem konkreten Zweig des jeweiligen Hierarchiebaumes zugeordnet. Die darin enthaltenen projektspezifischen Daten enthalten Informationen, aus denen unter Verwendung der Basis-Objekte semantische Informationen abgeleitet werden können. Darüber hinaus werden während der Gestaltungsphasen Abhängigkeiten, also Beziehungen zwischen einzelnen Komponenten, auch allgemein als Objekte bezeichnet, festgelegt. Auch diese enthalten Informationen, die einen Beitrag zu einer projektspezifischen Ontologie liefern. Generell kann eine zum jeweiligen Anlagentyp und den eingesetzten Basis-Objekten passende Basis-Ontologie gebildet werden. Ein darin enthaltenes Objekt weist in der Regel viele Eigenschaften und/oder Funktionen verfahrenstechnischer Art auf, die projektspezifische bzw. anlagenspezifische Ausprägungen annehmen. Beispiele sind der Signalfluss (z.B. Stromlaufplan), der Materialfluss (z.B. der Rohrleitungsplanung), die zeitliche Reihenfolge, etc. Objekte werden in der Regel in einer Objektspezifikation beschrieben. Die Projektspezifikation entspricht der Summe aller projektspezifischen Engineering-Daten und damit einer Beschreibung aller relevanten Komponenten einer Anlage.

Die Ontologie ist typischerweise generisch in Abhängigkeit der Automationsdomäne und des Anlagentyps, für den das Programm entworfen werden soll. Es kann aber notwendig sein, dass die Ontologie erweitert werden muss (projektspezifisch). Diese Erweiterungen können entweder temporär sein oder nach Konsistenzprüfung zur Basisontologie hinzugefügt werden.

Wird eine Ontologie verwendet, kann vorgesehen sein, dass sich eine semantische Annotation über zumindest eine Verbindung hinaus fortpflanzt. Wenn die Ontologie z.B. eine Temperaturregelung beschreibt, die sich über mehrere hintereinander liegende Funktionsblöcke (mit jeweils einer oder mehreren Verbindungen zwischen den Funktionsblöcken) erstreckt und bei welcher auch der gemessene Temperaturwert an mehrere dieser Funktionsblöcke weitergeleitet wird, so kann auch dem letzten Funktionsblock bzw. dessen Eingang jene semantische Annotation zugeordnet werden, die der Information "bei diesem Eingang/Ausgang handelt es sich um eine gemessene Außentemperatur" entspricht.

Die semantischen Informationen, insbesondere die semantischen Annotationen selbst, pflanzen sich von den Eingängen des Programms für das Automatisierungssystems über die Ontologie bis hin zu den Ausgängen fort und können auch für die weitere Verarbeitung durch nachgelagerte Systeme (wie etwa zur Visualisierung der Vorgänge im Automatisierungssystem) zur Verfügung gestellt werden.

Von Vorteil ist, wenn zumindest eine semantische Annotation automatisiert einem Eingang eines Funktionsblocks, einem Ausgang eines Funktionsblocks oder einem Funktionsblock zugeordnet wird. Das heißt, dass die semantischen Annotationen aus einem bestehenden Planungs- oder Engineering-Ergebnis, etwa einem (idealerweise maschinenlesbaren) Plan oder Gebäudemodell (z.B. basierend auf Building Information Modeling (BIM)) in das CFC-Programm übernommen werden.

Wenn diese semantischen Annotationen nicht automatisiert bestimmt werden können, müssen diese zusätzlich vom Programmierer des CFC-Programms eingegeben werden.

Das erfindungsgemäße Verfahren wird insbesondere dann angewendet, wenn das zu programmierende Automatisierungssystem in ein Smart Grid oder ein Smart Building integriert ist.

Schließlich betrifft die gegenständliche Erfindung auch ein Computerprogrammprodukt, umfassend Befehle, die bei der Ausführung des Programms durch einen Computer eines Automatisierungssystems (z.B. einer bestimmten Steuer- oder Regeleinheit eines Niederspannungsnetzes oder eines Gebäudeautomationssystems) diesen veranlassen, alle Schritte des erfindungsgemäßen Verfahrens auszuführen.

Das Computerprogrammprodukt umfasst also Software, die in einen Speicher eines Computers geladen, über ein Netzwerk übertragen oder auf einem Datenträger gespeichert sein kann.

Durch die erfindungsgemäße semantische Prüfung der Verbindungen zwischen Funktionsblöcken während der Programmierung, also der Eingabe und Festlegung der Verbindungen, wird die Effizienz des Engineering-Vorgangs erhöht. Durch die automatische Prüfung der Zulässigkeit von Verbindungen reduziert sich der Aufwand für die manuelle Verifikation des für das Automatisierungssystem erstellten Programms. Durch das Expertenwissen, das durch die semantische Prüfung eingebracht wird, reduziert sich auch das notwendige Domänenwissen, das ein Integrationstechniker bei der Programmierung des Automatisierungssystems vorweisen muss.

Auch wird die Fehlerwahrscheinlichkeit reduziert, weil die semantische Prüfung bestimmte Konfigurationen blockiert, die zwar syntaktisch möglich, semantisch aber falsch sind. Da solche Fehler oft nicht unmittelbar bei der Programmierung, also während des Engineering-Vorgangs, erkannt werden, sondern oftmals erst während der Inbetriebnahme des Automatisierungssystems oder sogar erst während des Betriebs des Automatisierungssystems, kann der Aufwand, der durch fehlerhaftes Engineering entsteht, stark reduziert werden.

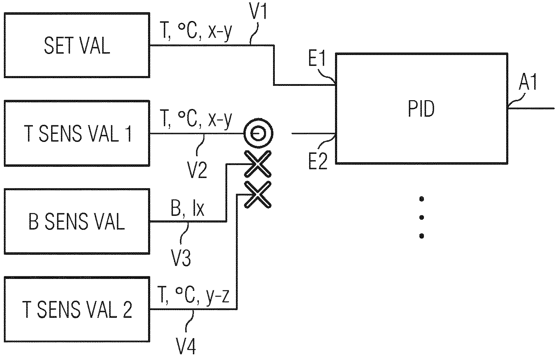

### KURZE BESCHREIBUNG DER FIGUR

Zur weiteren Erläuterung der Erfindung wird im nachfolgenden Teil der Beschreibung auf die Figur Bezug genommen, aus der weitere vorteilhafte Einzelheiten und mögliche Einsatzgebiete der Erfindung zu entnehmen sind. Dabei zeigt die Figur eine schematische Darstellung einer grafischen Oberfläche eines Computerprogramms während des Programmierens.

### WEGE ZUR AUSFÜHRUNG DER ERFINDUNG

Die Figur zeigt die grafische Oberfläche eines Computerprogramms zum Programmieren von Automatisierungssystemen mittels einer grafischen Programmiersprache. Es sind fünf Funktionsblöcke in Form von Rechtecken dargestellt. Zwischen den Ein- und Ausgängen unterschiedlicher Funktionsblöcke können nun Verbindungen V1,V2,V3,V4 hergestellt werden, die hier in Form von Linien dargestellt sind.

Der Funktionsblock SET VAL repräsentiert den Sollwert für eine Temperatur, als semantische Annotation für seinen (hier einzigen eingezeichneten) Ausgang sind "T" für Temperatur, "°C" für die Einheit der Temperatur und "x-y" als möglicher Temperaturbereich abgespeichert, sowie, dass es sich um einen "Sollwert" handelt. Diese semantische Annotation könnte automatisch z.B. aus einem Gebäudeplan übernommen worden sein, für welches Gebäude nun eine Regelung der Temperatur programmiert werden soll. Der Programmierer kann diese Informationen aber auch selbst aus einem Gebäudeplan ablesen und dem Funktionsblock SET VAL und/oder dessen Ausgang zuordnen. Diese Informationen können sich aber auch durch eine Ontologie auf den Funktionsblock SET VAL und/oder dessen Ausgang fortgepflanzt haben.

Der Funktionsblock T SENS VAL 1 repräsentiert den Messwert für eine erste Temperatur, die z.B. von einem ersten Temperatursensor gemessen wird. Als semantische Annotation für seinen (hier einzigen eingezeichneten) Ausgang sind "T" für Temperatur, "°C" für die Einheit der Temperatur und "x-y" als möglicher Temperaturbereich abgespeichert, sowie, dass es sich um einen "Messwert" handelt. Auch hier gilt, dass die semantische Annotation vorher automatisch oder händisch in das Computerprogramm eingepflegt werden kann oder aus einer Ontologie stammt.

Der Funktionsblock B SENS VAL repräsentiert den Messwert für eine Beleuchtungsstärke, die z.B. von einem entsprechenden Sensor gemessen wird. Als semantische Annotation für seinen (hier einzigen eingezeichneten) Ausgang sind "B" für die Beleuchtungsstärke und "lx" für die Einheit Lux abgespeichert, sowie, dass es sich um einen "Messwert" handelt. Auch hier gilt, dass die semantische Annotation vorher automatisch oder händisch in das Computerprogramm eingepflegt werden kann oder aus einer Ontologie stammt.

Der Funktionsblock T SENS VAL 2 repräsentiert den Messwert für eine zweite Temperatur, die z.B. von einem zweiten Temperatursensor gemessen wird. Als semantische Annotation für seinen (hier einzigen eingezeichneten) Ausgang sind "T" für Temperatur, "°C" für die Einheit der Temperatur und "y-z" als möglicher Temperaturbereich abgespeichert, sowie, dass es sich um einen "Messwert" handelt. Der zweite Temperatursensor hat einen anderen möglichen Wertebereich als der erste Temperatursensor und könnte z.B. die Temperatur in einem Warmwasserspeicher messen (oder eine Außentemperatur), während der erste Temperatursensor, der dem Funktionsblock T SENS VAL 1 zugeordnet ist, eine Raumtemperatur misst. Auch hier gilt, dass die semantische Annotation des Funktionsblocks T SENS VAL 2 vorher automatisch oder händisch in das Computerprogramm eingepflegt werden kann oder aus einer Ontologie stammt.

Der Funktionsblock PID repräsentiert einen PID-Regler, der hier auf Basis eines Sollwerts für die Temperatur von Funktionsblock SET VAL und auf Basis eines gemessenen Temperaturwerts von Funktionsblock T SENS VAL 1 die Temperatur eines Gebäudes regeln soll. Zu diesem Zweck hat der Funktionsblock PID zwei Eingänge E1,E2 und einen Ausgang A1.

Für die Eingänge E1,E2 ist ebenfalls jeweils die semantische Annotation "T" für Temperatur, "°C" für die Einheit der Temperatur und "x-y" als möglicher Temperaturbereich abgespeichert. Zusätzlich muss der semantischen Annotation des Eingangs E1 noch die semantische Information zugeordnet werden, dass hier ein "Sollwert" und nicht ein "Messwert" zu liefern ist. Dies kann vorher entweder automatisch (aus einem Gebäudeplan heraus), händisch durch den Programmierer, durch Informationen aus einer Ontologie und/oder aus der semantischen Beschreibung des Funktionsblocks PID abgeleitet werden. Entsprechend wurde hier bereits die Verbindung V1 zwischen dem Ausgang des Funktionsblocks SET VAL und dem Eingang E1 des Funktionsblocks PID hergestellt.

Zusätzlich muss der semantischen Annotation des Eingangs E2 noch die semantische Information zugeordnet werden, dass hier ein "Messwert" und nicht ein "Sollwert" zu liefern ist. Dies kann vorher wieder entweder automatisch (aus einem Gebäudeplan heraus), händisch durch den Programmierer, durch Informationen aus einer Ontologie und/oder aus der semantischen Beschreibung des Funktionsblocks PID abgeleitet werden.

Das Computerprogramm überprüft nun, welche Verbindungen zwischen den verbleibenden Ausgängen der Funktionsblöcke T SENS VAL 1, B SENS VAL und T SENS VAL 2 verbleiben und ob diese in zulässiger Weise mit dem Eingang E2 des Funktionsblocks PID verbunden werden können. Die zulässige Verbindung V2 wird hier als noch nicht durchgehende Linie mit einem Ring am Ende gekennzeichnet, weil die semantische Annotation des Ausgangs von T SENS VAL 1 ("T", "°C", "x-y" und "Messwert") übereinstimmt mit der semantische Annotation ("T", "°C", "x-y" und "Messwert") des Eingangs E2.

Die Verbindung V3 ist nicht zulässig, weil die semantische Annotation des Ausgangs von B SENS VAL betreffend physikalische Größe und Einheit nicht übereinstimmt mit der semantischen Annotation des Eingangs E2. Die Verbindung V4 ist ebenfalls nicht zulässig, weil die semantische Annotation des Ausgangs von T SENS VAL 2 zwar betreffend "T", "°C" und "Messwert" mit der semantischen Annotation des Eingang E2 übereinstimmt, aber nicht betreffend den Wertebereich. Hier sieht nämlich der Ausgang von T SENS VAL 2 einen Wertebereich von "y-z" vor, während der Eingang E2 einen Wertebereich von "x-y" vorsieht. Deshalb sind die Verbindungen V3 und V4 nicht durchgängig eingezeichnet, also noch nicht hergestellt, und zudem mit einem Kreuz markiert als Zeichen, dass diese für den verbleibenden Eingang E2 nicht zulässig sind.

Der Programmierer kann nun händisch die Verbindung V2 herstellen, sodass sich auf der grafischen Oberfläche eine durchgehende Linie vom Ausgang des Funktionsblocks T SENS VAL 1 zum Eingang E2 ergibt. Oder das Programm ist so konfiguriert, dass es als nächsten Schritt automatische die - einzig mögliche und zulässige - Verbindung V2 herstellt.

Die Punkte unter dem Funktionsblock PID deuten an, dass das Automatisierungssystem und daher entsprechend deren grafische Darstellung natürlich noch viel mehr Funktionsblöcke, insbesondere Regler, aufweisen kann.

### Bezugszeichenliste:

- A1: Ausgang
- B SENS VAL: Messwert für Beleuchtungsstärke (Funktionsblock)
- E1,E2: Eingang
- PID: PID-Regler (Funktionsblock)
- T SENS VAL 1: Messwert für erste Temperatur (Funktionsblock)
- T SENS VAL 2: Messwert für zweite Temperatur (Funktionsblock)
- SET VAL: Sollwert für Temperatur (Funktionsblock)
- V1,V2,V3,V4: Verbindung

## Patentansprüche

1. Verfahren zum Programmieren von Automatisierungssystemen mittels einer grafischen Programmiersprache unter Verwendung eines Computers, bei welchem Verfahren auf einer grafischen Oberfläche zwischen Ein- und Ausgängen (E1,E2) von Funktionsblöcken (SET VAL, T SENS VAL 1, B SENS VAL, T SENS VAL 2, PID) Verbindungen (V1,V2,V3,V4) hergestellt werden, **dadurch gekennzeichnet,**
- **dass** zumindest einem Ausgang eines ersten Funktionsblocks (SET VAL, T SENS VAL 1, B SENS VAL, T SENS VAL 2) und einem Eingang (E1,E2) eines zweiten Funktionsblocks (PID) eine semantische Annotation zugeordnet wird,
- **dass** eine Verbindung (V1,V2) zwischen dem Ausgang des ersten Funktionsblocks (SET VAL, T SENS VAL 1) und dem Eingang (E1,E2) des zweiten Funktionsblocks (PID) hergestellt wird, wenn diese Verbindung (V1,V2) nach der semantischen Annotation des Ausgangs des ersten Funktionsblocks (SET VAL, T SENS VAL 1) einerseits und nach der semantischen Annotation des Eingangs (E1,E2) des zweiten Funktionsblocks (PID) andererseits zulässig ist.

2. Verfahren nach Anspruch 1, **dadurch gekennzeichnet, dass** einem Funktionsblock (SET VAL, T SENS VAL 1, B SENS VAL, T SENS VAL 2, PID) eine semantische Annotation zugeordnet wird und die Zulässigkeit der Verbindung (V1,V2,V3,V4) von der semantischen Annotation des Funktionsblocks abhängig ist.

3. Verfahren nach Anspruch 1 oder 2, **dadurch gekennzeichnet, dass** eine Verbindung (V1,V2,V3,V4) zwischen den beiden Funktionsblöcken zuerst von einem Programmierer händisch eingegeben und erst dann hergestellt wird, wenn sie gemäß den semantischen Annotationen zulässig ist.

4. Verfahren nach Anspruch 1 oder 2, **dadurch gekennzeichnet, dass** dem Programmierer zumindest eine zulässige Verbindung (V2) zwischen den beiden Funktionsblöcken vorgeschlagen wird und nach Auswahl einer Verbindung durch den Programmierer diese ausgewählte Verbindung hergestellt wird.

5. Verfahren nach einem der Ansprüche 1 bis 4, **dadurch gekennzeichnet, dass** eindeutige zulässige Verbindungen (V2) ohne Eingriff eines Programmierers automatisch erstellt werden.

6. Verfahren nach einem der Ansprüche 1 bis 5, **dadurch gekennzeichnet, dass** dem Informationsmodell für die semantischen Annotationen eine Ontologie zugrunde liegt.

7. Verfahren nach Anspruch 6, **dadurch gekennzeichnet, dass** sich eine semantische Annotation über zumindest eine Verbindung (V1,V2,V3,V4) hinaus fortpflanzt.

8. Verfahren nach einem der Ansprüche 1 bis 7, **dadurch gekennzeichnet, dass** zumindest eine semantische Annotation automatisiert einem Eingang eines Funktionsblocks (E1,E2), einem Ausgang eines Funktionsblocks (A1) oder einem Funktionsblock (SET VAL, T SENS VAL 1, B SENS VAL, T SENS VAL 2, PID) zugeordnet wird.

9. Verfahren nach einem der Ansprüche 1 bis 8, **dadurch gekennzeichnet, dass** das zu programmierende Automatisierungssystem in ein Smart Grid oder ein Smart Building integriert ist.

10. Computerprogrammprodukt, umfassend Befehle, die bei der Ausführung des Programms durch einen Computer eines Automatisierungssystems diesen veranlassen, alle Schritte des Verfahrens nach einem der Ansprüche 1 bis 9 auszuführen.
